# EUROPEAN PATENT APPLICATION

(11) **EP 4 421 955 A2**
(43) Date of publication of application: **28.08.2024**
(21) Application number: 23206225.7
(22) Date of filing: 26.10.2023
(51) Int. Cl.: H01M 50/213, H01M 50/503, H01M 50/505, H01M 50/509

(54) **RECHARGEABLE BATTERY MODULE**

(30) Priority: 24.02.2023 KR 20230025396
(71) Applicant: Samsung SDI Co., Ltd., Yongin-si, Gyeonggi-do 17084 (KR)
(72) Inventor: KIM, Heonhee, 17084 Yongin-si (KR); HWANG, Kum-Yul, 17084 Yongin-si (KR); KWAG, Nohyun, 17084 Yongin-si (KR); BAE, Kwangsoo, 17084 Yongin-si (KR)
(74) Representative: Marks & Clerk LLP

(57) **Abstract**

A rechargeable battery module is provided. The rechargeable battery module may include; a plurality of battery cells; a lower case configured to accommodate lower ends of the battery cells; a holder case coupled to the lower case to accommodate the battery cells; a plurality of bus bars positioned on the holder case; bonding wires configured to connect the battery cells to the respective bus bars; and an upper case configured to cover the bus bars and the bonding wires and coupled to the holder case.

## Description

### BACKGROUND OF THE INVENTION

### (a) Field of the Invention

The present disclosure relates to a rechargeable battery module, and more particularly, to a rechargeable battery module capable of implementing voltage and current requirements of various modules with a single module design.

### (b) Description of the Related Art

A rechargeable battery can be repeatedly charged and discharged, unlike a primary battery. Small-capacity rechargeable batteries are used in portable electronic devices such as mobile phones, notebook computers, and camcorders. Large-capacity and high-density rechargeable batteries are used for power for motor driving of hybrid vehicles and electric vehicles, or energy storage.

The rechargeable battery may be used as a rechargeable battery module including a plurality of battery cells connected in series and/or parallel to drive a motor of, e.g., a hybrid vehicle requiring relatively high energy density. For example, the rechargeable battery module is formed by connecting electrode terminals of a plurality of battery cells provided in numbers corresponding to a desired voltage and current in order to implement a relatively high-output rechargeable battery module (e.g., an electric vehicle).

For example, such a rechargeable battery module includes a pair of holders, and is accommodated in a case by fastening the pair of holders accommodating battery cells with a fastening member. Before fastening the pair of holders with the fastening member, the battery cells are connected with tabs.

The rechargeable battery module applies a cell arrangement of a cell configuration negotiated with one or a small number of specific customers. Accordingly, when requesting development of a rechargeable battery module having a cell configuration with different voltages and currents, a separate module design using separate parts is developed and verification is required. This increases development and production costs.

### SUMMARY OF THE INVENTION

An embodiment has been made in an effort to provide a rechargeable battery module that implements voltage and current requirements of various modules with one design. An embodiment provides a rechargeable battery module including: a plurality of battery cells; a lower case configured to accommodate lower ends of the battery cells; a holder case coupled to the lower case to accommodate the battery cells; a plurality of bus bars positioned on the holder case; bonding wires configured to connect the battery cells to the respective bus bars; and an upper case configured to cover the bus bars and the bonding wires and coupled to the holder case.

The bus bars may connect the battery cells through a plurality of serial connections and a plurality of parallel connections.

The battery cell may be formed to have a cylindrical shape, and three battery cells accommodated in the holder case and adjacent to each other may form an isosceles triangular arrangement.

A side of a first battery cell among the three battery cells may form a first angle of 68 ° in an isosceles triangle, and sides of a second battery cell and a third battery cell may each form a second angle of 56 ° in the isosceles triangle.

The second battery cell and the third battery cell facing each other at the first angle at the side of the first battery cell among the three battery cells may form a first gap therebetween, the first battery cell and the second battery cell may form a second gap that is smaller than the first gap therebetween, and the first battery cell and the third battery cell may form the second gap therebetween.

The bus bars may each include a first member positioned between the first battery cell and the second battery cell to repeatedly extend along a first direction; and a second member positioned between the first battery cell and the third battery cell to repeatedly extend along the first direction.

The first member and the second member may be positioned at opposite sides of the first battery cell and are spaced apart in a second direction intersecting the first direction between the second battery cell and the third battery cell.

The first member and the second member may each include: a first straight portion extending in the first direction from opposite sides of the first battery cell; a second straight portion extending in the first direction between the second battery cell and the third battery cell; a third straight portion extending in the first direction between the first battery cell and the second battery cell and between the first battery cell and the third battery cell; a first inclined portion connecting the first straight portion and the third straight portion; and a second inclined portion connecting the second straight portion and the third straight portion.

The bus bar may be formed of duralumin, and may have a thickness of 0.5 mm and a width of 4.0 mm.

The second straight portion of the first member and the second straight portion of the second member may have a minimum third gap.

The second battery cell and the third battery cell facing each other at the first angle may form the first gap (e.g., 3.6 mm) therebetween, the first battery cell and the second battery cell may form a second gap (e.g., 1.0 mm) that is smaller than the first gap therebetween, and the third gap may be set to be smaller than the first gap and greater than the second gap.

The bus bars may be fixed on the holder case with a double-sided adhesive tape provided therebetween.

The bus bars may be fixed by being coupled to a protrusion provided in the holder case through a hole.

The bus bars may be fixed to the holder case by insert molding.

The holder case may include at least one partition wall extending in a second direction crossing the first direction to divide it into a plurality of sections in the first direction, and at least two bus bars positioned at opposite sides of the partition wall along the first direction may be connected by a bonding wire positioned on the partition wall.

The partition wall may divide the battery cells into at least a first cell area and a second cell area along the first direction, and the bus bars may each include at least a first area member connecting battery cells of the first cell area and a second area member connecting battery cells of the second cell area.

The bonding wire may wire bond the first area member and the second area member.

The battery cells may form a first module for connecting a plurality of first serial connection groups using a plurality of second parallel groups with the first area member in the first cell area, may form a second module for connecting a plurality of first serial connection groups using a plurality of second parallel groups with the second area member in the second cell area, and may form a module of a plurality of first double serial connections and a plurality of second parallel connections by wire bonding the first area member and the second area member with the bonding wire.

The battery cells may form a first module of 28s6p for connecting 28 serial connection groups using 6 parallel groups with the first area member in the first cell area, may form a second module of 28s6p for connecting 28 serial connection groups using 6 parallel groups with the second area member in the second cell area, and may a module of 56s6p by wire bonding the first area member and the second area member with the bonding wire.

The holder case may include three partition walls extending in a second direction crossing the first direction to divide it into four sections in the first direction, and four bus bars positioned at opposite sides of the partition wall along the first direction may be connected by a bonding wire positioned on the partition wall.

A rechargeable battery module in which the bonding wires is formed of the battery cells according to connection of the bus bars when it has 336 battery cells may be one of a 1 s336p module formed by 336 parallel connections, a 2s168p module formed by two serial connections and 168 parallel connections, a 3s112p module formed by 3 serial connections and 112 parallel connections, a 6s56p module formed by six serial connections and 56 parallel connections, a 12s28p module formed by 12 serial connections and 28 parallel connections, a 28s12p module formed by 28 serial connections and 12 parallel connections, a 56s6p module formed by 56 serial connections and 6 parallel connections, a 112s3p module formed by 112 serial connections and 3 parallel connections, a 168s2p module formed by 168 serial connections and 2 parallel connections, and a 336s1p modules formed by 366 serial connections.

The rechargeable battery module according to an embodiment may include a number of battery modules and bus bars corresponding thereto to wire bond the battery cells to the bus bars with bonding wires, and may respond to various required voltages and currents.

In addition, according to an embodiment, the bus bars are formed into a first area member and the second area member in a longitudinal direction to wire-bond or to not bond them with bonding wires, requirements of a rechargeable battery module requiring various voltages and currents may be implemented. Accordingly, the rechargeable battery module according to an embodiment may reduce development and production costs.
At least some of the above features that accord with the invention and other features according to the invention are set out in the claims.

### BRIEF DESCRIPTION OF THE DRAWINGS

FIG. 1 illustrates an exploded perspective view of a rechargeable battery module according to a first embodiment of the present disclosure.
FIG. 2 illustrates a top plan view in which bus bars are installed in battery cells in the rechargeable battery module of FIG. 1.
FIG. 3 illustrates a top plan view showing a bus bar in the rechargeable battery module of FIG. 1.
FIG. 4 illustrates a partial top plan view in which bus bars are installed in battery cells in the rechargeable battery module of FIG. 2.
FIG. 5 illustrates a top plan view geometrically showing a disposition relationship of battery cells in FIG. 4.
FIG. 6 illustrates a cross-sectional view showing an attachment structure of a holder case and a bus bar cut along line VI-VI of FIG. 4.
FIG. 7 illustrates a cross-sectional view showing a structure in which a bus bar is coupled and fixed to a protrusion of a holder case cut along line VII-VII of FIG. 4.
FIG. 8 illustrates a cross-sectional view showing structures of a holder case and a bus bar applied to a rechargeable battery module according to another embodiment of the present disclosure.
FIG. 9 illustrates a top plan view showing battery cells connected in series and parallel with a bus bar in the rechargeable battery module according to the first embodiment of the present disclosure.
FIG. 10 illustrates a top plan view showing battery cells connected in series and parallel with a bus bar in the rechargeable battery module according to a second embodiment of the present disclosure.
FIG. 11 illustrates a top plan view showing battery cells connected in series and parallel with a bus bar in the rechargeable battery module according to a third embodiment of the present disclosure.

### DETAILED DESCRIPTION OF THE EMBODIMENTS

Hereinafter, embodiments of the present invention will be described with reference to the accompanying drawings. As those skilled in the art would realize, the described embodiments may be modified in various different ways, all without departing from the scope of the present invention as defined in the claims. The drawings and description are to be regarded as illustrative in nature and not restrictive. Like reference numerals designate like elements throughout the specification.

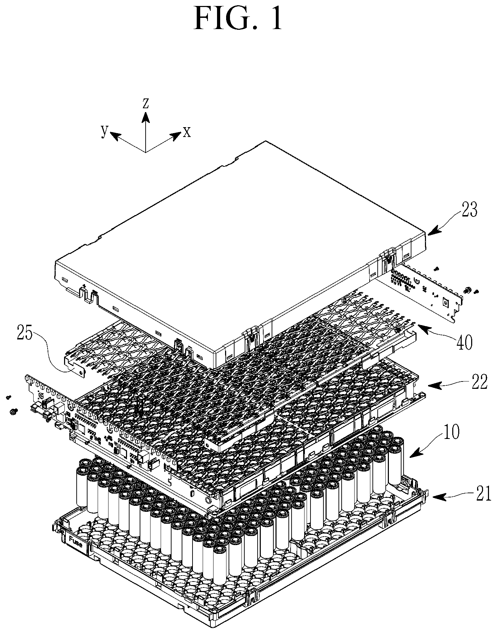

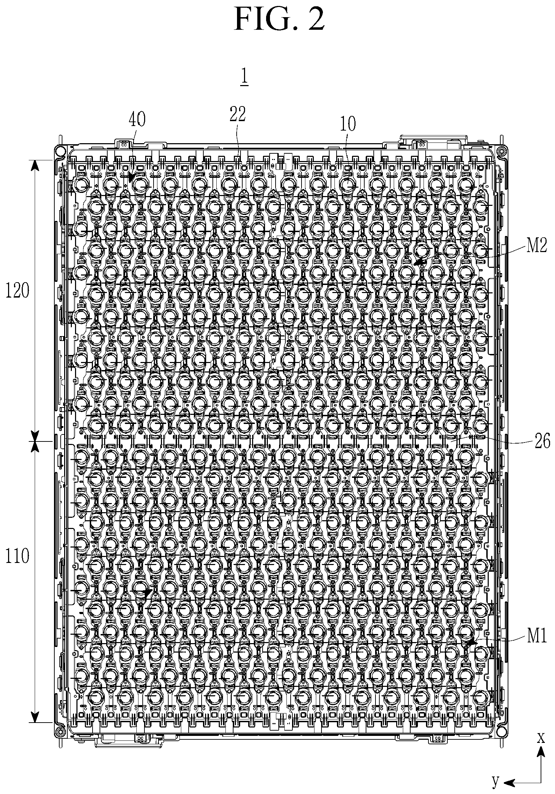

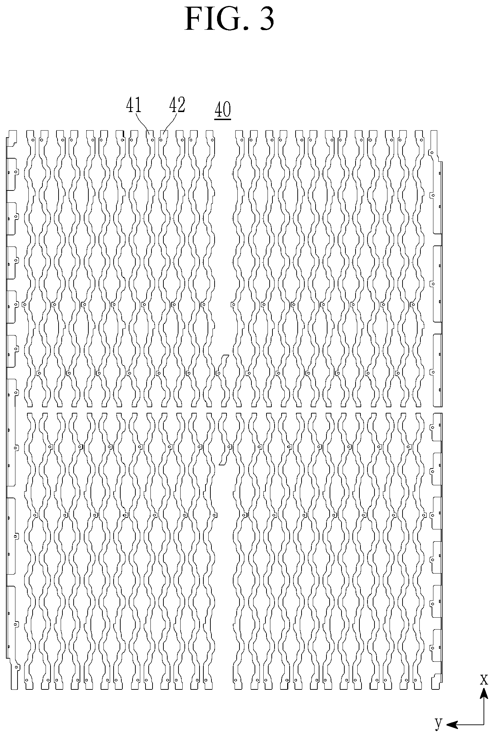

FIG. 1 illustrates an exploded perspective view of a rechargeable battery module according to a first embodiment of the present disclosure, FIG. 2 illustrates a top plan view in which bus bars are installed in battery cells in the rechargeable battery module of FIG. 1, and FIG. 3 illustrates a top plan view showing a bus bar in the rechargeable battery module of FIG. 1.

Referring to FIG. 1 to FIG. 3, according to the first embodiment, the rechargeable battery module 1 includes a plurality of battery cells 10, a lower case 21, a holder case 22, bus bars 40, bonding wires 50, and an upper case 23.

The battery cells 10 are formed as a cylindrical rechargeable battery and accommodated in the lower case 21 and the holder case 22 coupled to each other. The lower case 21 accommodates lower sides and lower portions of the battery cells 10, and the holder case 22 is coupled to the lower case 21 to accommodate upper sides and upper portions of the battery cells 10.

The upper case 23 is positioned on the holder case 22 to be coupled thereto. The bus bars 40 are positioned on and coupled to the holder case 22. In this case, an intermediate medium member 25 is provided between the holder case 22 and the upper case 23. The intermediate medium member 25 is positioned on a side surface of the holder case 22, to enable the holder case 22 and the upper case 23 to be securely coupled to inside and outside sides thereof.

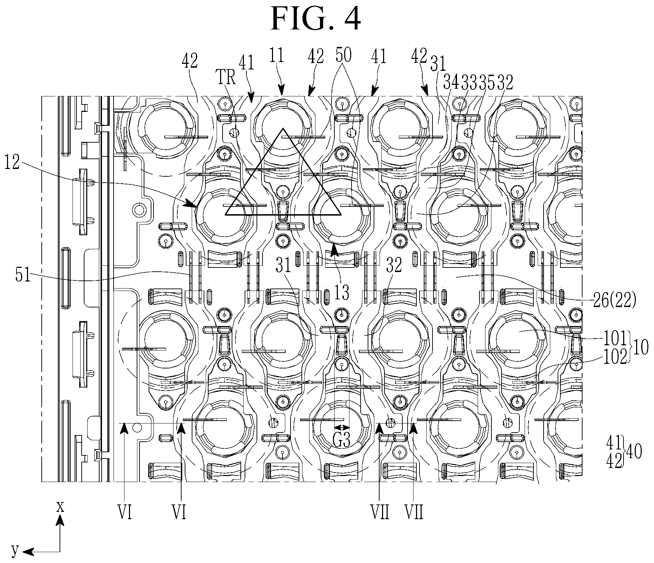

FIG. 4 illustrates a partial top plan view in which bus bars are installed in battery cells in the rechargeable battery module of FIG. 2. Referring to FIG. 4, the bonding wires 50 respectively connect the battery cells 10 to the bus bars 40. The battery cells 10 include a positive terminal 101 and a negative case 102 at a side of the holder case 22. The positive terminal 101 and the negative case 102 are provided at a same side of the battery cells 10. In addition, the terminal may be a negative electrode, and the case may be a positive electrode.

The battery cells 10 implement a plurality of serial connections and a plurality of parallel connections by means of the bonding wires 50 and the bus bars 40. Accordingly, the rechargeable battery module may implement various voltages and various currents.

That is, the bonding wire 50 wire-bonds the positive terminal 101 and the negative case 102 of the battery cells 10 to the bus bars 40. Accordingly, the battery cells 10 are connected in parallel in a first direction (x-axis direction), and the battery cells 10 are connected in parallel in a second direction (y-axis direction) crossing the first direction (x-axis direction).

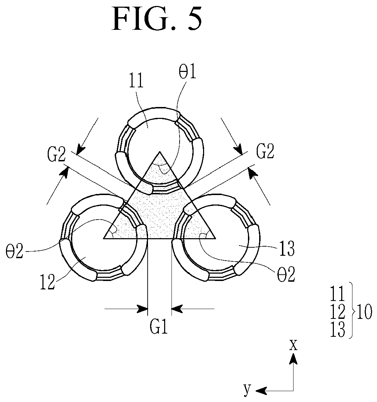

FIG. 5 illustrates a top plan view geometrically showing a disposition relationship of battery cells in FIG. 4. Referring to FIG. 4 and FIG. 5, three adjacent battery cells 10 form an isosceles triangular arrangement TR. When cells are said to be forming an isosceles triangle, it refers to three cells being arranged such that, in plan view, imaginary lines connecting the respective centre points of the three cells form an isosceles triangle. Each battery cell 10 of the isosceles triangular arrangement (TR) forms a different isosceles triangular arrangement (TR) with the other two battery cells 10 adjacent thereto.

The three adjacent battery cells 10 include a first battery cell 11, a second battery cell 12, and a third battery cell 13. The first battery cell 11 forms a first angle θ1 of the isosceles triangle, and the second battery cell 12 and the third battery cell 13 side form remaining second angles θ2 and θ2 of the isosceles triangle.

The holder case 22 may be formed to have a quadrangular or square shape as illustrated in FIG. 2. For example, when the holder case is formed to have the square shape (not illustrated), a first angle θ1 of the isosceles triangular arrangement TR is formed as 68 °, and a second angle θ2 is smaller than the first angle θ1 and is equal to 56 °. That is, the second battery cell 12 and the third battery cell 13 facing each other at the first angle θ1 of the first battery cell 11 form a first gap G1 therebetween.

The first battery cell 11 and the second battery cell 12 form a second gap G2 that is smaller than the first gap G1 therebetween. The first battery cell 11 and the third battery cell 13 form the second gap G2 therebetween. In addition, the first gap G1 may be set to 3.6 mm, and the second gap G2 may be set to 1.0 mm.

Referring back to FIG. 2 to FIG. 4, the bus bar 40 includes a first member 41 and a second member 42. The battery cells 10 having the isosceles triangular arrangement TR will be described as an example. Each battery cell 10 of the isosceles triangular arrangement (TR) forms a different isosceles triangular arrangement (TR) with the other two battery cells 10 adjacent thereto.

The first member 41 is positioned between the first battery cell 11 and the second battery cell 12 to repeatedly extend along the first direction (x-axis direction). The second member 42 is positioned between the first battery cell 11 and the third battery cell 13 to repeatedly extend along the first direction.

In addition, the first member 41 and the second member 42 are positioned at opposite sides of the first battery cell 11 in the second direction (y-axis direction), and are arranged spaced apart in the second direction (y-axis direction) between the second battery cell 12 and the third battery cell 13.

The first, second, and third battery cells 11, 12, and 13 form an isosceles triangular arrangement (TR). The first battery cell 11 forms one isosceles triangular arrangement TR with the other two battery cells 10 adjacent thereto. The second battery cell 12 forms another isosceles triangular arrangement (TR) with the other two battery cells 10 adjacent thereto. The third battery cell 13 forms another isosceles triangular arrangement TR with the other two battery cells 10 adjacent thereto.

Each of Positions of the first, second, and third battery cells 11, 12, and 13 forming three isosceles triangular arrangements TR occupies a different position of a different isosceles triangular arrangement TR.

The bus bar 40 has a structure in which the first member 41 and the second member 42 are repeatedly positioned in the second direction, except where they are positioned at an outside edge of the module. The first member 41 and the second member 42 form a left-right symmetrical structure with an imaginary line in the first direction set therebetween as a center line.

A specific structure of the first member 41 and the second member 42 will be described. Since they form a symmetrical structure with each other, the second member 42 will be described as an example. The second member 42 includes a first straight portion 31, a second straight portion 32, a third straight portion 33, a first inclined portion 34, and a second inclined portion 35.

The first straight portion 31 extends from opposite sides of the first battery cell 11 in the first direction (x-axis direction). The second straight portion 32 extends between the second battery cell 12 and the third battery cell 13 in the first direction. The third straight portion 33 extends between the first battery cell 11 and the second battery cell 12 and between the first battery cell 11 and the third battery cell 13 in the first direction.

The first inclined portion 34 obliquely connects the first straight portion 31 and the third straight portion 33 to the first straight portion 31 and the third straight portion 33. The second inclined portion 35 obliquely connects the second straight portion 32 and the third straight portion 33 to the second straight portion 32 and the third straight portion 33.

As an example, the bus bar 40 may be formed of duralumin, and may have a thickness of 0.5 mm and a width of 4.0 mm. The second straight portion 32 of the first member 41 and the first straight portion 31 of the second member 42 have a minimum third gap G3.

In this case, the third gap G3 may have a minimum of 1.5 mm in consideration of creepage clearance. The third gap G3 is set smaller than the first gap G1 and greater than the second gap G2. Accordingly, the first gap G1 is 3.6 mm, and the second gap G2 is 1.0 mm.

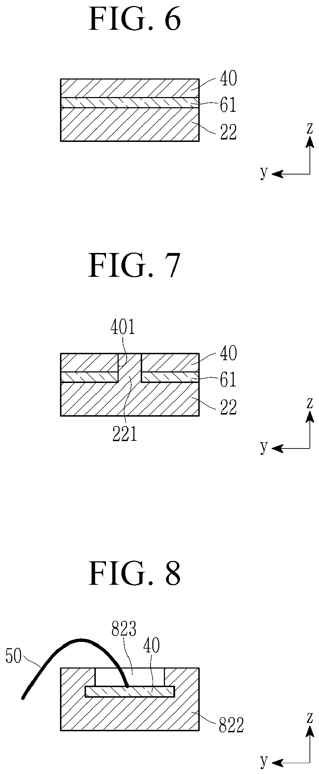

FIG. 6 illustrates a cross-sectional view showing an attachment structure of a holder case and a bus bar cut along line VI-VI of FIG. 4. Referring to FIG. 4 and FIG. 6, the bus bar 40 may be fixed on the holder case 22 with a double-sided tape 61 provided therebetween. An attachment structure of the double-sided tape 61 prevents pre-installed bus bars 40 from being displaced during an installation process of a large number of bus bars 40.

FIG. 7 illustrates a cross-sectional view showing a structure in which a bus bar is coupled and fixed to a protrusion of a holder case cut along line VII-VII of FIG. 4. Referring to FIG. 4 and FIG. 7, the bus bar 40 is coupled to a protrusion 221 of the holder case 22 through a hole 401 to be fixed thereto. A coupling structure of the protrusion 221 and the hole 401 prevents pre-installed bus bars 40 from being displaced during an installation process of a large number of bus bars 40.

The attachment structure of the double-sided adhesive tape 61 and the coupling structure of the protrusion 221 and the hole 401 may be used selectively or may be used together. When both of the structures are applied, a fixing structure of the bus bar 40 may be further strengthened.

FIG. 8 illustrates a cross-sectional view showing structures of a holder case and a bus bar applied to a rechargeable battery module according to another embodiment of the present disclosure. Referring to FIG. 8, the bus bar 40 may be fixed to the holder case 822 by insert molding.

In this case, the holder case 822 forms an opening 823 on an upper side, enabling access of the bonding wire 50 for wire bonding the bus bar 40 to the battery cell 10 through an opening 823. Since the holder case 822 having an insert molding structure of the bus bar 40 eliminates an installation process of the bus bar 40, a separate handling process of the bus bar 40 is not required.

Hereinafter, rechargeable battery modules capable of implementing various requirements for voltage and current according to a module with one design are described through various examples of a holder case having a length of a bus bar and a partition wall corresponding thereto.

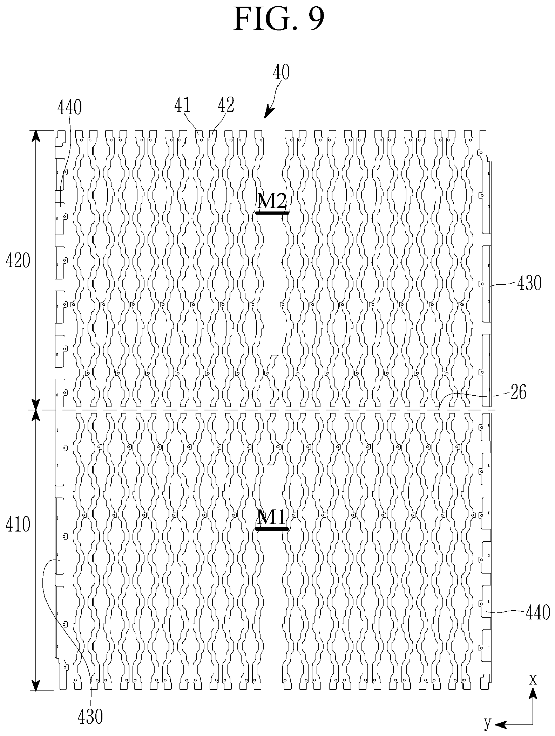

FIG. 9 illustrates a top plan view showing battery cells connected in series and parallel with a bus bar in the rechargeable battery module according to the first embodiment of the present disclosure. Referring to FIG. 2 to FIG. 4 and FIG. 9, the holder case 22 includes at least one partition wall 26 extending in a second direction crossing the first direction so as to divide it into a plurality of sections in the first direction.

At least two bus bars 40 are positioned at opposite sides of the partition wall 26 along the first direction. The two bus bars 40 are connected by a bonding wire 51 (see FIG. 4) positioned on the partition wall 26.

The partition wall 26 divides the battery cells 10 into a first cell area 110 and a second cell area 120 along the first direction (x-axis direction). Accordingly, the bus bar 40 includes a first area member 410 connecting the battery cells 10 of the first cell area 110 and a second area member 420 connecting the battery cells 10 of the second cell area 120. In addition, the bus bar 40 further includes a first outer member 430 and a second outer member 440 at an outer side, enabling required serial and parallel connections.

The battery cells 10 form a first module M1 by a plurality of first serial connections and a plurality of second parallel connections from the first cell area 110 to the first area member 410. In addition, the battery cells 10 form a second module M2 by a plurality of first serial connections and a plurality of second parallel connections from the second cell area 120 to the second area member 420.

The battery cells 10 form the rechargeable battery module by a plurality of first double serial connections and a plurality of second parallel connections by wire bonding the first area member 410 and the second area member 420 with a bonding wire 51 (see FIG. 4, not illustrated in FIG. 2 and FIG. 9). When wire bonding is not performed, the first and second modules M1 and M2 are driven respectively, and thus voltage and current requirements different from those in the case of wire bonding may be implemented.

The notation which is used to denote the number of serial and parallel connections is as follows: XsYp, where X and Y are integers, with X representing the number of serial connections and Y representing the number of parallel connections. Hence, for example, 28s6p represents a module with 28 serial connections and 6 parallel connections.

Specifically, in the first cell area 110, the battery cells 10 form the first module M1 of 28s6p by 28 serial connections S and 6 parallel connections P by the first area member 410. In addition, in the second cell area 120, the battery cells 10 form the second module M2 of 28s6p by 28 serial connections S and 6 parallel connections P by the second area member 420.

In addition, the battery cells 10 form the rechargeable battery module 1 of the first embodiment by 56s6p connection by the first and second modules M1 and M2 by the first and second area members 410 and 420 connected by the bonding wire 51.

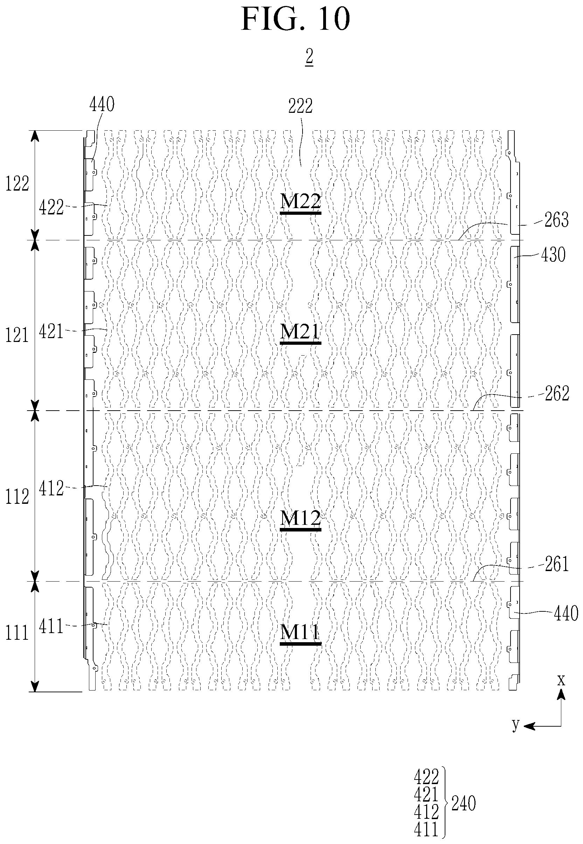

FIG. 10 illustrates a top plan view showing battery cells connected in series and parallel with a bus bar in the rechargeable battery module according to a second embodiment of the present disclosure. Referring to FIG. 10, in the rechargeable battery module 2 of the second embodiment, the holder case 222 includes three partition walls 261, 262, and 263 extending in the second direction crossing the first direction to divide it into 4 sections in the first direction.

Four bus bars 240 (411, 412, 421, and 422) positioned at opposite sides of partition walls 261, 262, and 263 are connected by bonding wires 51 (see FIG. 4, not illustrated in FIG. 10) positioned on the partition walls 261, 262, and 263.

The partition walls 261, 262, and 263 divide the battery cells 10 into first, second, third, and fourth cell areas 111, 112, 121, and 122 along a first direction (x-axis direction). The battery cells 10 are equally positioned as in FIG. 1 and FIG. 2.

Accordingly, the bus bars 240 (411, 412, 421, and 422) include first, second, third, and fourth area members 411, 412, 421, and 422 connecting the battery cells 10 of the first, second, third, and fourth cell areas 111, 112, 121, and 122. In addition, the bus bar 40 further includes a first outer member 430 and a second outer member 440 at an outer side, enabling required serial and parallel connections.

The battery cells 10 respectively form first, second, third, and third modules M11, M12, M21, and M22 of 28s3p by a plurality of first serial connections and a plurality of second parallel connections from the first, second, third, and fourth cell areas 111, 112, 121, and 122 to the first, second, third, and fourth area members 411, 412, 421, and 422.

In addition, the battery cells 10 form the r battery module 2 of the second embodiment using112s3p connection by the first, second, third, and fourth modules M11, M12, M21, and M22, by the first, second, third and fourth area members 411, 412, 421 and 422 connected by the bonding wire 51.

When wire bonding is not performed, the first, second, third, and fourth modules M11, M12, M21, and M22 are respectively driven, and thus voltage and current requirements different from those in the case of wire bonding may be implemented.

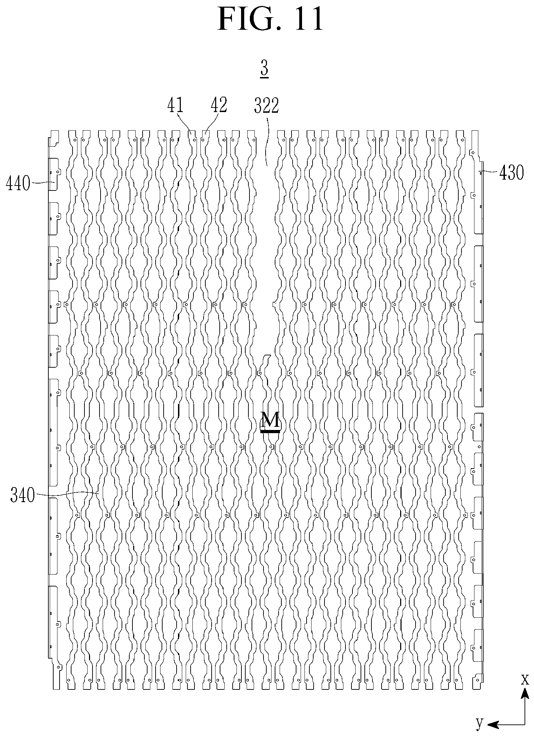

FIG. 11 illustrates a top plan view showing battery cells connected in series and parallel with a bus bar in the rechargeable battery module according to a third embodiment of the present disclosure. Referring to FIG. 11, in the rechargeable battery module 3 of the third embodiment, a holder case 322 is formed as a single case along the first direction. Therefore, since a bus bar 340 is formed as a single bar along the first direction, a bonding wire is not required.

The battery cells 10 form one module M of 28s12p by a plurality of serial connections and a plurality of parallel connections to one bus bar 340 in one cell area. That is, the rechargeable battery module 3 of the third embodiment is formed.

In the meantime, in an embodiment, when a number of battery cells 10 is 336, the battery cells10 may form various rechargeable battery modules according to the connection between the bus bars 40, 240, 340 and the first and second outer members 430 and 440 by the bonding wires 51. Specific drawings thereof will be omitted. When the rechargeable battery module that can be included in the present disclosure has 336 battery cells, bonding wires may be formed in various ways according to connection of the bus bars. The invention is not limited to any specific number of battery cells.

A rechargeable battery module including battery cells may be one of a 1s336p module formed by 336 parallel connections, a 2s168p module formed by two serial connections and 168 parallel connections, a 3s112p module formed by 3 serial connections and 112 parallel connections, a 6s56p module formed by 6 serial connections and 56 parallel connections, and a 12s28p module formed by 12 serial connections and 28 parallel connections.

In addition, the rechargeable battery module including battery cells may be one of a 28s12p module formed by 28 serial connections and 12 parallel connections, a 56s6p module formed by 56 serial connections and 6 parallel connections, a 112s3p module formed by 112 serial connections and 3 parallel connections, a 168s2p module formed by 168 serial connections and 2 parallel connections, and a 336s1p module formed by serial connection of 366.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

### <Description of Symbols>

| | | | |
|---|---|---|---|
| 1, 2, 3: | rechargeable battery module | 10: | battery cell |
| 11: | first battery cell | 12: | second battery cell |
| 13: | third battery cell | 21: | lower case |
| 22: | holder case | 23: | upper case |
| 25: | intermediate medium member | | 26: cell barrier |
| 31: | first straight portion | 32: | second straight portion |
| 33: | third straight portion | 34: | first inclined portion |
| 35: | second inclined portion | 40: | bus bar |
| 41: | first member | 42: | second member |
| 50: | bonding wire | 51: | bonding wire |
| 61: | double-sided adhesive tape | 101: | positive terminal |
| 102: | negative electrode case | 110, 120: | first, second cell area |
| 111, 112, 121, 122: | first, second, third, fourth cell area | | |
| 221: | protrusion | 240, 340: | bus bar |
| 261, 262, 263: | cell barrier | 322: | holder case |
| 401: | hole | 410, 411: | first area member |
| 412, 420: | second area member | 421, 422: | third, fourth area member |
| 430: | first outer member | 440: | second outer member |
| 822: | holder case | 823: | opening |
| G1: | first gap | G2: | second gap |
| G3: | third gap | M: | module |
| M1: | first module | M2: | second module |
| M11, M12, M21, M22: | first, second, third, fourth module | | |
| TR: | isosceles triangle arrangement | θ1: | first angle |
| θ2: | second angle | | |

## Claims

1. A rechargeable battery module comprising:
a plurality of battery cells;
a lower case configured to accommodate lower ends of the battery cells;
a holder case coupled to the lower case to accommodate the battery cells;
a plurality of bus bars positioned on the holder case;
bonding wires configured to connect the battery cells to the respective bus bars; and
an upper case configured to cover the bus bars and the bonding wires and coupled to the holder case.

2. The rechargeable battery module as claimed in claim 1, wherein
the bus bars connect the battery cells through a plurality of serial connections and a plurality of parallel connections.

3. The rechargeable battery module as claimed in claim 1 or claim 2, wherein
the battery cell is formed to have a cylindrical shape, and
three battery cells accommodated in the holder case and adjacent to each other form an isosceles triangular arrangement, wherein, optionally,
a side of a first battery cell among the three battery cells forms a first angle of 68 ° in an isosceles triangle, and
sides of a second battery cell and a third battery cell each form a second angle of 56 ° in the isosceles triangle.

4. The rechargeable battery module as claimed in claim 3, wherein
the second battery cell and the third battery cell facing each other at the first angle at the side of the first battery cell among the three battery cells form a first gap therebetween,
the first battery cell and the second battery cell form a second gap that is smaller than the first gap therebetween, and
the first battery cell and the third battery cell form the second gap therebetween.

5. The rechargeable battery module as claimed in claim 4, wherein
the bus bars each include:
a first member positioned between the first battery cell and the second battery cell to repeatedly extend along a first direction; and
a second member positioned between the first battery cell and the third battery cell to repeatedly extend along the first direction" wherein, optionally,
the first member and the second member
are positioned at opposite sides of the first battery cell and are spaced apart in a second direction intersecting the first direction between the second battery cell and the third battery cell.

6. The rechargeable battery module as claimed in claim 5, wherein
the first member and the second member
each include: a first straight portion extending in the first direction from opposite sides of the first battery cell;
a second straight portion extending in the first direction between the second battery cell and the third battery cell;
a third straight portion extending in the first direction between the first battery cell and the second battery cell and between the first battery cell and the third battery cell;
a first inclined portion connecting the first straight portion and the third straight portion; and
a second inclined portion connecting the second straight portion and the third straight portion, wherein, optionally, the bus bar is formed of duralumin, and has a thickness of 0.5 mm and a width of 4.0 mm.

7. The rechargeable battery module as claimed in claim 6, wherein
the second straight portion of the first member and the second straight portion of the second member have a minimum third gap.

8. The rechargeable battery module as claimed in claim 7, wherein
the second battery cell and the third battery cell facing each other at the first angle form the first gap therebetween,
the first battery cell and the second battery cell form a second gap that is smaller than the first gap therebetween, and
the third gap
is set to be smaller than the first gap and greater than the second gap.

9. The rechargeable battery module as claimed in any preceding claim, wherein
the bus bars are fixed to the holder case using one of:
(i) a double-sided adhesive tape provided therebetween;
(ii) being coupled to a protrusion provided in the holder case through a hole; or
(iii) by insert molding.

10. The rechargeable battery module as claimed in any preceding claim, wherein
the holder case
includes at least one partition wall extending in a second direction crossing the first direction to divide it into a plurality of sections in the first direction, and
at least two bus bars positioned at opposite sides of the partition wall along the first direction
are connected by a bonding wire positioned on the partition wall.

11. The rechargeable battery module as claimed in claim 9, wherein
the partition wall
divides the battery cells into at least a first cell area and a second cell area along the first direction, and
the bus bars each include
at least a first area member connecting battery cells of the first cell area and a second area member connecting battery cells of the second cell area,, wherein, optionally,
the bonding wire
bonds the first area member and the second area member.

12. The rechargeable battery module as claimed in claim 11, wherein
the battery cells
form a first module for connecting a plurality of first serial connection groups using a plurality of second parallel groups with the first area member in the first cell area,
form a second module for connecting a plurality of first serial connection groups using a plurality of second parallel groups with the second area member in the second cell area, and
form a module of a plurality of first double serial connections and a plurality of second parallel connections by wire bonding the first area member and the second area member with the bonding wire.

13. The rechargeable battery module as claimed in claim 11, wherein
the battery cells
form a first module of 28s6p for connecting 28 serial connection groups using 6 parallel groups with the first area member in the first cell area,
form a second module of 28s6p for connecting 28 serial connection groups using 6 parallel groups with the second area member in the second cell area, and
form a module of 56s6p by wire bonding the first area member and the second area member with the bonding wire.

14. The rechargeable battery module as claimed in any preceding claim, wherein
the holder case
includes three partition walls extending in a second direction crossing the first direction to divide it into four sections in the first direction, and
four bus bars positioned at opposite sides of the partition wall along the first direction
are connected by a bonding wire positioned on the partition wall.

15. The rechargeable battery module as claimed in any preceding claim, wherein
a rechargeable battery module in which the bonding wires is formed of the battery cells according to connection of the bus bars when it has 336 battery cells is one of
a 1 s336p module formed by 336 parallel connections,
a 2s168p module formed by two serial connections and 168 parallel connections,
a 3s112p module formed by 3 serial connections and 112 parallel connections,
a 6s56p module formed by 6 serial connections and 56 parallel connections,
a 12s28p module formed by 12 serial connections and 28 parallel connections,
a 28s12p module formed by 28 serial connections and 12 parallel connections,
a 56s6p module formed by 56 serial connections and 6 parallel connections,
a 112s3p module formed by 112 serial connections and 3 parallel connections,
a 168s2p module formed by 168 serial connections and 2 parallel connections, and
a 336s1p modules formed by 366 serial connections.
